# EUROPÄISCHE PATENTSCHRIFT

(11) **EP 1 485 248 B1**
(45) Veröffentlichungstag und Bekanntmachung des Hinweises auf die Patenterteilung: **02.01.2008**
(21) Anmeldenummer: 03724836.6
(22) Anmeldetag: 17.03.2003
(51) Int. Cl.: B32B 5/28, D06B 3/04, C08J 5/04, B29C 70/24

(54) **TEXTILES GLAS-/PTFE-GEWEBE**
GLASS/PTFE TEXTILE MATERIAL
TISSU TEXTILE DE VERRE/PTFE

(30) Priorität: 15.03.2002 DE 10211667
(43) Veröffentlichungstag der Anmeldung: 15.12.2004
(73) Patentinhaber: P-D Tec Fil GmbH Technische Filamente, 04758 Oschatz (DE)
(72) Erfinder: RECTOR, Horst-Dieter, 52134 Herzogenrath (DE); FRENKEN, Johannes, 52080 Aachen (DE)
(74) Vertreter: König, Werner
(86) Internationale Anmeldenummer: PCT/DE2003/000863
(87) Internationale Veröffentlichungsnummer: WO 2003/078157

(56) Entgegenhaltungen:
- EP-A- 0 136 727
- EP-A- 0 218 995
- EP-A- 0 524 585
- WO-A-00/56676
- WO-A-01/70855
- WO-A-98/58984
- DE-A- 4 137 627
- US-A- 5 576 381

## Beschreibung

Die Erfindung betrifft ein textiles Glas-/PTFE-Gewebe aus multifilen Schuss- und Kettfäden, deren Filamente mit PTFE beschichtet sind.

Es sind reine Glasgewebe bekannt, die nach dem Weben einen Ausrüstungsprozess (Coating) durchlaufen. Dabei wird das Gewebe in einer PTFE-Dispersion getränkt. Überschüssige Dispersion wird danach abgestreift, anschließend erfolgt das Sintern des PTFE. Es ist bekannt, je nach dem angestrebten Endprodukt und dessen Anwendung bis zu 10 Durchläufe des Tränk-Abstreif-Sinter-Prozesses durchzuführen. Auf diese Weise gelangt man zu einem Endprodukt, bei dem der Gewichtsanteil des PTFE über 60% ausmacht.

Bei den so erhaltenen Endprodukten sind die Kett- und Schussfäden nicht bis in den Kern hinein durchtränkt. Vielmehr bleibt beim Tauchen im Dispersionsbad Restluft zwischen den Filamenten erhalten, da Gewebeverbünde aufgrund ihrer Kompaktheit zwangsläufig ein vollständiges Durchtränken nicht zulassen. Dies führt insbesondere in den Kreuzungspunkten von Kett- und Schussfäden zu einer erheblichen Gefährdung des Materials, da an diesen Stellen kein oder zu wenig PTFE platziert werden kann.

Bei dynamischer Beanspruchung derartiger Produkte kommt es zu einer Reibung von Glas an Glas wegen des Aufeinandertreffens der insbesondere in den Kreuzungspunkten nicht oder nicht ausreichend beschichteten Umfangsflächen der Glasfäden sowie auch wegen des Reibungskontakts zwischen den einzelnen Filamenten der Fäden. Als Folge hiervon ist mit einem Versagen des Produkts durch Zerstörung der Filamente zu rechnen.

Zur Vermeidung von Korrosionen an nicht geschützten Berührungsflächen bzw. -punkten von Gewebefäden ist es bereits bekannt (DE 41 37 627 A1), die Umfangsflächen von textilen Fadengebilden mit hochtemperaturbeständigem Kunststoff zu beschichten und danach das gewünschte Flächengebilde zu erzeugen. Ein zuverlässiger Schutz bei Reibungskontakt zwischen den Umfangsflächen der Fäden sowie zwischen deren Filamenten kann damit aber noch nicht erreicht werden.

Weiter ist zu beobachten, dass bei den in Rede stehenden Produkten Probleme durch die Bildung von sogenannten Pin Holes beim Tränken des Glasgewebes entstehen. Dabei handelt es sich um kleine Kanäle, die von außen bis in den Kern des Gewebes hineinreichen können und zum Teil durch dieses Gewebe ganz hindurchgehen. Sie bilden sich über den Bindungslöchern, die sich beim ersten Tränken noch stark erweitern, weil die Fäden unter Nässe ihren Querschnitt immer verkleinern und dadurch den Durchtrittsraum zwischen den Fäden vergrößern. Bei nachfolgenden Tränkungsdurchläufen gelingt es dann häufig nicht mehr, alle diese Bindungslöcher zu schließen. Dadurch wiederum wird nicht nur der optische Eindruck des Produkts beeinträchtigt, sondern durch die Kapillarwirkung solcher Pin Holes können Feuchtigkeit und Keime in das fertige Produkt eindringen und zu Verfärbung, Schimmelbildung, Festigkeitsabfall und vorzeitigem Altem des Produkts führen. Dieser Effekt wird insbesondere bei Architekturmembranen, die permanent extremen Witterungseinflüssen ausgesetzt sind, beobachtet.

Davon ausgehend ist es nun Aufgabe der vorliegenden Erfindung, ein Gewebe der eingangs beschriebenen Art zu schaffen, das am fertigen Produkt eine Reibung von Glas auf Glas und die Bildung von pin holes zuverlässig vermeidet.

Diese Aufgabe wird erfindungsgemäß dadurch gelöst, dass die Filamente mit ausgesintertem PTFE beschichtet sind, dass die Zwischenräume zwischen den Filamenten damit ausgefüllt sind und dass die Außenfläche der Fäden von der Beschichtung der Filamente gebildet ist.

Dies führt dazu, dass das Gewebe in seinem Zustand vor Durchlaufen des Ausrüstungsprozesses bereits zuverlässig so ausgestattet ist, dass jedenfalls die Reibung Glas an Glas sowohl zwischen Fäden als auch zwischen Filamenten vermieden und pin holes weitestgehend ausgeschlossen werden. Ferner werden unerwünschte Feuchtigkeitseinschlüsse vermieden, die sich ansonsten bei der weiteren Bearbeitung durch Kapillareinschlüsse ergeben könnten.

Überdies wird bei dem erfindungsgemäßen Gewebe festgestellt, dass es eine flusenfreie Oberfläche ergibt und damit Oberflächenprobleme am Fertigprodukt vermeidet, die bei dem bisher bekannten Glasgeweben die Hauptursache für den Zweite-Wahl-Anfall bilden.

Die einzelnen Fäden des Gewebes haben keine jeweils den ganzen Faden einhüllende Beschichtung. Vielmehr reichen lediglich die Beschichtungen der Filamente, in den Außenzonen eines Fadens. Dies hat zur Folge, dass diese Fäden ohne Probleme verwebt werden können.

Die zuverlässige Umhüllung der einzelnen Filamente hat ferner zur Folge, dass etwa sich lösende Teile der Filamente zuverlässig eingeschlossen sind und bleiben, also nicht aus dem Gewebe austreten können. Dies ist bedeutsam, da solche Teile insbesondere bei einem Durchmesser von ≤ 3 µ in die Atemwege von Personen eintreten und zu gravierenden Gesundheitsschäden führen können. Mit der Erfindung wird demnach freigestellt, für den jeweiligen Einsatz den technisch und wirtschaftlich optimalen Durchmesser für die Filamente auszuwählen, ohne gesundheitliche Konsequenzen befürchten zu müssen.

Ferner hat die zuverlässige Umhüllung der einzelnen Filamente zur Folge, dass deren dynamische Tüchtigkeit (Fatigue Resistance) erheblich erhöht wird mit der Konsequenz, dass mit Filamenten größerer Durchmesser gearbeitet werden kann. Daraus ergibt sich eine Kosteneinsparung und Vermeidung gesundheitsgefährdender geringer Filamentdurchmesser.

Erfindungsgemäß beträgt die Menge an PTFE, die auf einen Faden aufgebracht wird, 1 % bis 50%, vorzugsweise 1 % bis 30%, des Gewichts des gesamten Fadens.

Das Gewebe kann in vielen bekannten Bindungen hergestellt werden. Die verwendeten Fäden können aus ungedrehten, gedrehten oder gezwirnten Garnen bestehen. Sie können unterschiedliche Titer und/oder unterschiedliche Beladungen mit PTFE aufweisen.

Nachfolgend wird eine Ausführungsform des erfindungsgemäßen Gewebes anhand von Zeichnungen beschrieben. Es zeigt:

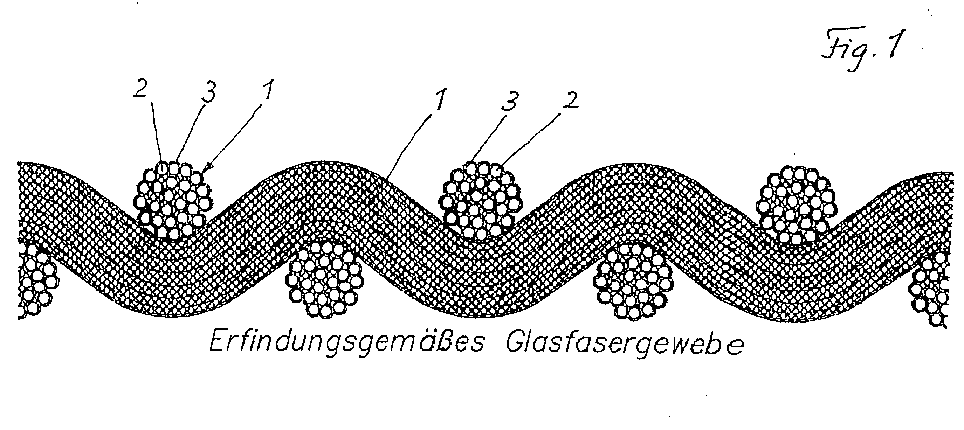

- Figur 1:: einen Querschnitt durch das Gewebe und
- Figur 2:: einen Querschnitt durch einen Faden.

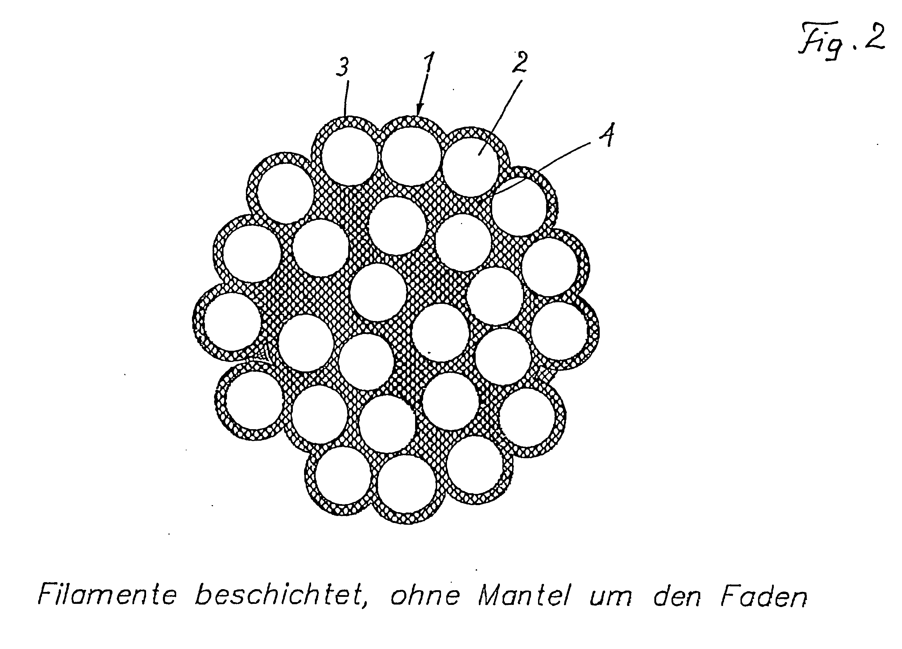

Der Faden (1) (Fig. 2) besteht aus Filamenten (2), die mit PTFE beschichtet sind, das vor dem Verweben bereits ausgesintert ist. Das PTFE umhüllt dabei das jeweilige Filament (2) und füllt die Zwischenräume (4) zwischen den Filamenten (2) aus.

Die Außenkontur des Fadens (1) wird ausschließlich von den Umhüllungen (3) der einzelnen außen am Faden (1) liegenden Filamente (2) gebildet. Ein Gesamtumhüllen für den gesamten Faden (1) ist nicht vorgesehen.

Beim Verweben kommt es demnach nicht zu einem Aufeinanderliegen von Glas auf Glas, sondern ausschließlich zu einem Aufeinanderliegen der Umhüllungen (3) der Filamente des Kettfadens auf den Umhüllungen der Filamente des Schussfadens. Dies führt zu einer hochfesten, dynamisch belastbaren Struktur, die nach geeigneter Ausrüstung insbesondere für Architekturmembranen, Transportbänder, Backfolien und diverse Industrieanwendungen vorteilhaft ist. Auch das Aufeinanderliegen von ungeschützten Filamenten wird vermieden.

Nachfolgend werden zwei konkrete Ausführungsbeispiele beschrieben.

### Ausführungsbeispiel 1: Anwendung zur Herstellung einer Architekturmembran

| | |
|---|---|
| Flächengewicht: | 630 g/qm |
| Glasanteil: | 80 % |
| PTFE-Anteil: | 20 % |
| Kette: | 19 Faden/cm |
| Schuss: | 18 Faden/cm |
| Kettmaterial: | Zwirn tex 68 x 2 130 Z |
| Schussmaterial: | Zwirn tex 68 x 2 130 Z |
| Bindung: | Panama |

Dabei wird bei einem 5 cm breiten Gewebestreifen eine Reißfestigkeit - in Kettrichtung gemessen - von 6500 bis 7500 N/5cm festgestellt. Wird das Gewebe in herkömmlicher Weise aufgebaut, so werden vor dem Ausrüsten entsprechende Reißfestigkeiten in der Größenordnung von 4500 bis 5500 N/5cm gemessen. Das erfindungsgemäße Verfahren führt also zu einer Steigerung der Reißfestigkeit von mehr als 50% gegenüber dem bisher angewandten Verfahren.

### Ausführungsbeispiel 2: Anwendung zur Herstellung einer Backfolie

| | |
|---|---|
| Flächengewicht: | 123,5 g/qm |
| Glasanteil: | 82 % |
| PTFE-Anteil: | 18 % |
| Kette: | 24 Faden/cm |
| Schuss: | 22 Faden/cm |
| Kettmaterial: | Garn 22 tex 28 Z |
| Schussmaterial: | Garn 22 tex 28 Z |
| Bindung: | Leinwand |

Dabei wird bei einem 5 cm breiten Gewebestreifen eine Reißfestigkeit - in Kettrichtung gemessen - von 1700 bis 1800 N/5cm festgestellt. Wird das Gewebe in herkömmlicher Weise aufgebaut, so werden vor dem Ausrüsten entsprechende Reißfestigkeiten in der Größenordnung von 1200 bis 1300 N/5cm gemessen. Das erfindungsgemäße Verfahren führt also zu einer Steigerung der Reißfestigkeit bis zu 50% gegenüber dem bisher angewandten Verfahren.

## Patentansprüche

1. Textiles Glas-/PTFE-Gewebe aus multifilen Fäden (1), deren Filamente (2) mit PTFE beschichtet sind,
**dadurch gekennzeichnet,**
**dass** die Filamente (2) mit ausgesintertem PTFE beschichtet sind,
**dass** die Zwischenräume (4) zwischen den Filamenten (2) damit ausgefüllt sind und
**dass** die Außenfläche der Fäden (1) von der Beschichtung (3) der Filamente (2) gebildet ist.

2. Gewebe nach einem der vorhergehenden Ansprüche, **dadurch gekennzeichnet, dass** die jeweils auf einen Faden (1) aufgebrachte Menge an PTFE 1% bis 50% des Gewichts des Gesamtfadens (Filamente + Beschichtung) ausmacht.

3. Gewebe nach Anspruch 1, **dadurch gekennzeichnet, dass** die jeweils auf den Faden (1) aufgebrachte Menge an PTFE 1% bis 30% des Gewichts des Gesamtfadens ausmacht.

4. Gewebe nach einem der vorhergehenden Ansprüche, **dadurch gekennzeichnet, dass** es eine Leinwandbindung aufweist.

5. Gewebe nach einem der vorhergehenden Ansprüche, **dadurch gekennzeichnet, dass** es eine abgewandelte Leinwandbindung aufweist.

6. Gewebe nach Anspruch 5, **dadurch gekennzeichnet, dass** es eine Panamabindung aufweist.

7. Gewebe nach einem der Ansprüche 1 bis 3, **dadurch gekennzeichnet, dass** es eine Köper-, Satin- oder Doppelgewebebindung aufweist.

8. Gewebe nach einem der vorhergehenden Ansprüche, **dadurch gekennzeichnet, dass** Kett- und Schussfäden aus ungedrehten, gedrehten oder gezwirnten Garnen bestehen.

9. Gewebe nach einem der vorhergehenden Ansprüche, **dadurch gekennzeichnet, dass** Kett- und Schussfäden unterschiedliche Titer und/oder unterschiedliche Beladungen mit PTFE aufweisen.

## Claims

1. A textile woven glass-PTFE fabric consisting of multifil threads (1) whose filaments (2) are coated with PTFE,
**characterized**
**in that** the filaments (2) are coated with fully sintered PTFE,
**in that** the interspaces (4) between the filaments (2) are completely filled with fully sintered PTFE, and
**in that** the outer surface of the threads (1) is formed by the coating (3) on the filaments (2).

2. The fabric according to any one of the preceding claims that is **characterized in that** the amount of PTFE applied to any one thread (1) comprises in each case from 1% to 50% of the weight of the overall thread (filaments + coating).

3. The fabric according to claim 1 that is **characterized in that** the amount of PTFE applied to any one thread (1) comprises from 1% to 30% of the weight of the overall thread.

4. The fabric according to any one of the preceding claims that is **characterized in that** it has a plain-weave construction.

5. The fabric according to any one of the preceding claims that is **characterized in that** it has a modified plain-weave construction.

6. The fabric according to claim 5 that is **characterized in that** it has a panama construction.

7. The fabric according to any one of claims 1 to 3 that is **characterized in that** it has a twill, satin or double-cloth construction.

8. The fabric according to any one of the preceding claims that is **characterized in that** warp and weft threads consist of zero-twist, twisted or folded yarns.

9. The fabric according to any one of the preceding claims that is **characterized in that** warp and weft threads have different yarn counts and/or different loadings with PTFE

## Revendications

1. Tissu textile de verre/PTFE composé de fils (1) de chaîne et trame à fils multiples dont les filaments (2) sont revêtus de PTFE,
**caractérisé en ce que**
les filaments (2) sont revêtus de PTFE fritté,
les intervalles (4) entre les filaments (2) en sont remplis et
la surface extérieure des fils (1) est formée par le revêtement (3) des filaments (2).

2. Tissu textile selon une des revendications précédentes, **caractérisé en ce que** la quantité de PTFE appliquée respectivement sur un fil (1) représente 1 % à 50 % du poids de l'ensemble du fil (filaments + revêtement).

3. Tissu textile selon la revendication 1, **caractérisé en ce que** la quantité de PTFE appliquée respectivement sur le fil (1) représente 1 % à 30 % du poids de l'ensemble du fil.

4. Tissu textile selon une des revendications précédentes, **caractérisé en ce qu'**il présente une armure de toile.

5. Tissu textile selon une des revendications précédentes, **caractérisé en ce qu'**il présente une variante d'armure de toile.

6. Tissu textile selon la revendication 5, **caractérisé en ce qu'**il présente une armure de Panama.

7. Tissu textile selon une des revendications 1 à 3, **caractérisé en ce qu'**il présente une armure nattée, satin ou tissu double pièce.

8. Tissu textile selon une des revendications précédentes, **caractérisé en ce que** les fils de chaîne et de trame sont composés de fils non moulinés, moulinés ou retordus.

9. Tissu textile selon une des revendications précédentes, **caractérisé en ce que** les fils de chaîne et de trame présentent des titres différents et/ou diverses charges de PTFE.
